Europäisches Patentamt

European Patent Office

Office européen des brevets

(19)

(11) Veröffentlichungsnummer: **0 353 711**

**A2**

(12) **EUROPÄISCHE PATENTANMELDUNG**

(21) Anmeldenummer: **89114187.1**

(22) Anmeldetag: **01.08.89**

(51) Int. Cl.⁴: **G01N 29/04**

(30) Priorität: **04.08.88 DE 8809946 U**

(43) Veröffentlichungstag der Anmeldung:
**07.02.90 Patentblatt 90/06**

(84) Benannte Vertragsstaaten:
**CH DE FR GB IT LI SE**

(71) Anmelder: **Nukem GmbH**
**Rodenbacher Chaussee 6 Postfach 11 00 80**
**D-6450 Hanau 11(DE)**

(72) Erfinder: **Maurer, Albrecht, Dr.**
**Hans-Memling-Strasse 5**
**D-6453 Seligenstadt(DE)**
Erfinder: **Hellmuth, Joachim**
**Spessartstrasse 28**
**D-6458 Rodenbach(DE)**

(74) Vertreter: **Stoffregen, Hans-Herbert, Dr.**
**Dipl.-Phys. et al**
**Patentanwälte Strasse & Stoffregen**
**Salzstrasse 11a Postfach 2144**
**D-6450 Hanau/Main 1(DE)**

(54) **Halterung für einen Aufsatzprüfkopf.**

(57) Die Erfindung bezieht sich auf eine Halterung (10) für einen Aufsatzprüfkopf (12) zur zerstörungsfreien Prüfung von insbesondere flächigen Werkstücken. Die Halterung (10) wird dabei mittels eines Flüssigkeitspolsters auf dem Werkstück abgestützt.

FIG 1

Halterung für einen Aufsatzprüfkopf

Die Erfindung bezieht sich auf eine Halterung für einen vorzugsweise kardanisch gelagerten Aufsatzprüfkopf zur zerstörungsfreien Prüfung von insbesondere flächigen Werkstücken mittels über eine Flüssigkeitsstrecke angekoppeltem Ultraschall, wobei die Halterung einen dem Werkstück zugewandten Basisbereich umfaßt.

Es sind Halterungen für Aufsatzprüfköpfe bekannt, bei denen die Prüfköpfe mit Hilfe einer Kontaktplatte und einer kardanischen Aufbringung parallel zur Oberfläche des zu überprüfenden Werkstückes geführt werden, um eine definierte Einschallgeometrie zu gewährleisten. Die Ankopplung des Ultraschalls selbst erfolgt dabei über eine Wasserstrecke.

Um die Halterung mit dem Prüfkopf entlang des Werkstückes zu führen, steht die Kontaktplatte im unmittelbaren Kontakt mit dem Werkstück. Hierdurch ergibt sich unter anderem der Vorteil, daß während der Prüfung der Abstand zwischen Prüfkopf und Werkstückoberfläche gleich bleibt. Der unmittelbare Kontakt zwischen der Kontaktplatte und dem Werkstück kann jedoch den Nachteil in sich bergen, daß die Werkstückoberfläche in Mitleidenschaft gezogen und gegebenenfalls beschädigt wird.

Aufgabe der vorliegenden Erfindung ist es, eine Halterung der eingangs genannten Art so auszubilden, daß bei gleichbleibendem Abstand zwischen Prüfkopf und Werkstückoberfläche gewährleistet ist, daß diese durch die Halterung nicht in Mitleidenschaft gezogen wird.

Die Aufgabe wird erfindungsgemäß dadurch gelöst, daß zwischen dem Basiselement und dem werkstück zur Erzielung eines gleichbleibenden Abstands zwischen der Halterung und der Werkstückoberfläche ein Wasserkissen ausgebildet ist. Insbesondere zeichnet sich die Erfindung dadurch aus, daß der Basisabschnitt vorzugsweise zumindest drei von Flüssigkeit beaufschlagte Öffnungen umfaßt, über die die Flüssigkeit in Richtung des Werkstückes strömt.

Durch die Ausbildung des Wasserkissens, und zwar unterhalb der auch als Adaptionspunkte zu bezeichnenden Öffnungen, ist gewährleistet, daß der Abstand zwischen der Aufnahme und damit dem Prüfkopf und der Werkstückoberfläche einen gleichbleibenden Wert einnimmt, so daß reproduzierbare Meßergebnisse erzielbar sind. Durch das Wasserkissen ist dabei gleichzeitig der Vorteil gegeben, daß die Halterung die Werkstückoberfläche nicht berührt, so daß auch Werkstücke geprüft werden können, die gegen eine mechanische Berührung empfindlich sind.

Vorzugsweise befinden sich die Öffnungen in den Ecken eines gedachten Dreiecks. Hierzu weist der Basisabschnitt vorzugsweise eine dreieckförmige Geometrie in Form einer Platte auf, in der Bohrungen verlaufen, die zu den Eckpunkten führen, von denen die Öffnungen ausgehen, deren Flächennormalen senkrecht zur Werkstückoberfläche verlaufen.

Vorzugsweise gehen von dem plattenförmigen Basiselement sich in Richtung der Werkstückoberfläche erstreckende Vorsprünge in Form von zylinderförmigen Elementen aus, in denen Kanäle für die Flüssigkeit verlaufen. Die Vorsprünge selbst sind vorzugsweise in das Basiselement einschraubbar, so daß ein einfacher Zusammenbau und gegebenenfalls Austausch möglich ist.

Selbstverständlich kann das Basiselement auch eine andere Geometrie und Form aufweisen. Wesentlich ist allein, daß von dem Basiselement mittelbar oder unmittelbar Öffnungen ausgehen, über die die Flüssigkeit zur Ausbildung eines Flüssigkeitskissens zwischen dem Basiselement und damit der Halterung und der Werkstückoberfläche ausströmt.

Nach einer Ausgestaltung ist vorgesehen, daß das Basiselement von einem die Ankopplungsflüssigkeit für den Ultraschall aufnehmenden, sich in Richtung des Werkstückes erstreckenden hohlzylinderförmigen Körper durchsetzt ist bzw. von dem Basiselement lösbar ausgeht.

Eigenerfinderisch wird vorgeschlagen, daß vom Randbereich des Körpers ein flanschartiger Abschnitt ausgeht, der in dem dem Werkstück zugewandten Bereich zumindest eine ringförmige Einbuchtung aufweist. Insbesondere weist der Abschnitt konzentrisch zur Körperlängsachse verlaufende ringförmige sich in Richtung des Werkstücks erstreckende Vorsprünge auf. Durch die die Flüssigkeit aufnehmende Einbuchtung ergibt sich insbesondere der Vorteil, daß Luftblasen von der den Ultraschall ankoppelnden Flüssigkeitssäule ferngehalten werden, wodurch Störsignale vermieden werden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines in der Zeichnung dargestellten bevorzugten Ausführungsbeispiels.

Es zeigen:

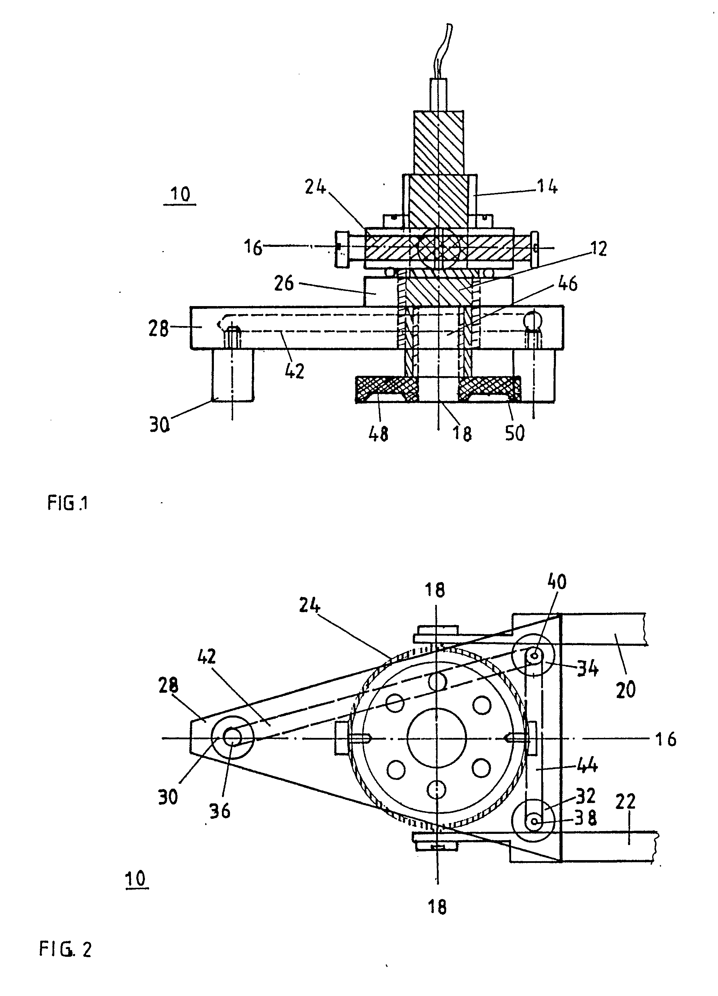

Fig. 1 eine erfindungsgemäße Halterung in Seitenansicht, teilweise geschnitten und

Fig. 2 die Halterung nach Fig. 1 in Draufsicht.

In den Figuren ist eine Halterung (10) zur Aufnahme eines Prüfkopfs (12) dargestellt, von dem über eine Flüssigkeits- wie Wasserstrecke angekoppelter Ultraschall auf ein Werkstück zu dessen Prüfung abgeschallt wird.

Der Prüfkopf (12) wird von einer Aufnahme (14) gehalten, die kardanisch gelagert ist, also um die Achsen (16) und (18) verschwenkbar ist. Die Drehachse (18) durchsetzt dabei Arme (20) und (22), die einen Ring (24) aufnehmen, in dem um die Achse (16) verschwenkbar die Aufnahme (14) und damit der Prüfkopf (12) festgelegt ist. Fest mit der Aufnahme (14) ist über ein vorzugsweise ebenfalls ringförmiges Zwischenstück (26) ein Basiselement (28) verbunden, das dem senkrecht zur Zeichenebene verlaufenden Werkstück zugewandt ist. Das Basiselement (28) weist in Draufsicht eine Dreieckform auf und ist plattenförmig ausgebildet.

Von den Eckbereichen des Basiselementes (28) gehen Vorsprünge (30), (32) und (34) aus, in denen Bohrungen (36), (38) und (40) verlaufen, die in den Stirnseiten der Vorsprünge (30), (32) und (34) münden und somit der Werkstückoberfläche zugewandt sind. Die Bohrungen (36), (38) und (40) werden über Leitungen (42) und (44) mit Flüssigkeit wie mit Wasser beaufschlagt, um so zwischen den Stirnseiten der Vorsprünge (30), (32) und (34) und der Werkstückoberfläche ein Flüssigkeitskissen zu erzeugen. Hierdurch wird ein stets gleichbleibender Abstand zwischen den Vorsprüngen (30), (32) und (34) und damit der Halterung und der Werkstückoberfläche erzeugt. Demzufolge ergeben sich definierte Zustände zwischen dem Prüfkopf (12) und dem Werkstück, so daß eine reproduzierbare Ultraschallprüfung möglich wird.

Die Ankopplung des Ultraschalls von dem Prüfkopf (12) zur Werkstückoberfläche erfolgt über eine in einem hohlzylinderförmigen Körper (46) vorhandene Flüssigkeits- wie Wassersäule. Dieser hohlzylinderförmige Körper (46) ist mit dem Basiselement (28) bzw. mit dem Zwischenstück (26) vorzugsweise durch Einschraubung lösbar verbunden. Der hohlzylinderförmige Körper (46) weist parallel zur Werkstückoberfläche eine teller- bzw. flanschförmige Erstreckung (48) mit zumindest einer teller- oder ringförmigen Einbuchtung (50) auf, in der sich ebenfalls Flüssigkeit ansammeln kann.

**Ansprüche**

1. Halterung (10) für einen vorzugsweise kardanisch gelagerten Aufsatzprüfkopf (12) zur zerstörungsfreien Prüfung von insbesondere flächigen Werkstücken mittels über eine Flüssigkeitsstrecke wie Wasserstrecke angekoppeltem Ultraschall, wobei die Halterung ein dem Werkstück zugewandtes Basiselement umfaßt,
**dadurch gekennzeichnet,**

daß zwischen dem Basiselement (28) und dem Werkstück zur Erzielung eines gleichbleibenden Abstands zwischen der Halterung und der Werkstückoberfläche ein Wasserkissen ausgebildet ist.

2. Halterung nach Anspruch 1,
**dadurch gekennzeichnet,**
daß das Basiselement (28) vorzugsweise drei mit Flüssigkeit beaufschlagte Öffnungen umfaßt, über die die Flüssigkeit in Richtung des Werkstückes strömt.

3. Halterung nach Anspruch 2,
**dadurch gekennzeichnet,**
daß die Öffnungen in den Ecken eines gedachten Dreiecks liegen.

4. Halterung nach zumindest Anspruch 2,
**dadurch gekennzeichnet,**
daß das Basiselement (28) ein dreieckförmiges Plattenelement ist, von dessen Eckbereichen in Richtung des Werkstücks sich erstreckende zylinderförmige, die Öffnungen aufweisende Vorsprünge (30, 32, 34) ausgehen.

5. Halterung nach zumindest Anspruch 4,
**dadurch gekennzeichnet,**
daß die Vorsprünge (30, 32, 34) mit dem plattenförmigen Element (28) lösbar vorzugsweise in Form von Schraubverbindungen verbunden sind.

6. Halterung nach zumindest Anspruch 1,
**dadurch gekennzeichnet,**
daß das Basiselement (28) von einem die Ankopplungsflüssigkeit für den Ultraschall aufnehmenden, sich in Richtung des Werkstückes erstreckenden hohlzylinderförmigen Körper (46) durchsetzt ist bzw. von dem Basiselement (28) lösbar ausgeht.

7. Halterung nach Anspruch 6,
**dadurch gekennzeichnet,**
daß vom Randbereich des Körpers (46) ein flanschartiger Abschnitt (48) ausgeht, der in dem dem Werkstück zugewandten Bereich zumindest eine teller- bzw. ringförmige Einbuchtung (50) aufweist.

8. Halterung nach zumindest Anspruch 7,
**dadurch gekennzeichnet,**
daß der Abschnitt (48) konzentrisch zur Körperlängsachse verlaufende ringförmige sich in Richtung des Werkstücks erstreckende Vorsprünge aufweist.

FIG.1

FIG. 2